# EUROPEAN PATENT SPECIFICATION

(11) **EP 3 065 268 B1**
(45) Date of publication and mention of the grant of the patent: **22.05.2019**
(21) Application number: 16158845.4
(22) Date of filing: 04.03.2016
(51) Int. Cl.: H02K 5/14, H02K 15/00, H02K 9/28, H01R 39/38, H01R 43/14

(54) **BRUSH HOLDER FOR A COLLECTOR ASSEMBLY OF AN ALTERNATOR AND ALTERNATOR COMPRISING SAID BRUSH HOLDER**
BÜRSTENHALTER FÜR EINE KOLLEKTORANORDNUNG EINES WECHSELSTROMGENERATORS UND WECHSELSTROMGENERATOR MIT DIESEM BÜRSTENHALTER
PORTE-BALAIS POUR UN ENSEMBLE COLLECTEUR D'UN ALTERNATEUR ET ALTERNATEUR COMPORTANT CE PORTE-BALAIS

(30) Priority: 05.03.2015 IT MI20150331
(43) Date of publication of application: 07.09.2016
(73) Proprietor: Ansaldo Energia S.p.A., 16152 Genova (IT)
(72) Inventor: RACITI, Michele, 16148 GENOVA (IT); ARCIDIACONO, Mario, 16143 GENOVA (IT); NOVARO, Micaela, 17100 SAVONA (IT)
(74) Representative: Andreotti, Erika

(56) References cited:
- FR-A1- 2 443 157
- JP-A- S5 743 539
- US-A- 4 082 975
- US-A- 4 355 254
- US-A- 4 663 552
- US-B1- 7 365 470

## Description

The present invention relates to a brush holder for an alternator and an alternator comprising said brush holder.

The plants for the production of electrical energy usually comprise at least one rotating (steam and/or gas) turbine driving an alternator, configured to produce electrical energy.

The known types of alternators extend along a longitudinal axis and are provided with a fixed part, the stator, and with a mobile part, the rotor.

The rotor is housed inside the stator and is supported by two bearings, which are keyed on the rotating shaft of the alternator.

The thus configured rotor rotates driven by the turbine. The rotor is configured to generate a magnetic field which induces an electromotive force in the stator, and is provided with electrical windings. The electrical windings of the rotor are fed with a supply current through a collector assembly, which receives the electrical current from an excitation system and transmits it to the electrical windings of the rotor.

The collector assembly is configured to transmit the current from the excitation system to the rotor windings and is provided with a plurality of sliding contacts, formed by brushes, preferably made of graphite.

Preferably, the brushes are housed in a removable element, called brush holder. Generally, each brush holder contains four brushes. The collector assembly includes a number of brush holders that varies from three to sixteen according to the alternator power output.

The brush holder is removable to allow a periodic replacement of the brushes, which are often subject to electrical and mechanical wear.

In most cases, the brush holder is configured so that it can be extracted while the alternator is in operation, to ensure the continuity of the service.

Examples of known brush holders are disclosed in documents US7365470B1, FR2443157A1, US4082975A, US4355254, JPS5743539A, US4663552A.

However, extracting the brush holder while the alternator is in operation involves many risks for the operator.

During the extraction operations, in fact, the operator is exposed to the risk of meeting rotating parts at high speed and live parts. In addition, the operator is exposed to the risk of being hit by brush debris produced by the impact between the rotating collector rings and the brushes.

It is therefore an object of the present invention to provide a brush holder that can ensure the operator's safety during the extraction and repositioning steps while the alternator is in operation.

In accordance with this object, the present invention relates to a brush holder for a collector assembly of an alternator according to claim 1.

It is a further object of the present invention to provide an alternator ensuring to the operator a safe extraction and repositioning of the brush holders housed therein.

In accordance with these objects, the present invention relates to an alternator comprising a rotor and a collector assembly provided with at least one collector ring coupled to the rotor, a fixed support frame and at least one brush holder supported by the frame; the brush holder being of the type claimed in any one of claims 1 to 4.

Further characteristics and advantages of the present invention will become clear from the following description of a not limiting embodiment, with reference to the figures of the accompanying drawings, in which:
- Figure 1 is a schematic side view of an alternator, preferably of a plant for the production of electrical energy, according to the present invention;
- Figure 2 is a schematic front view, with parts in section and parts removed for clarity's sake, of a detail of the alternator of Figure 1 showing some brush holders according to the present invention;
- Figure 3 is a schematic perspective view, with parts removed for clarity's sake, of a brush holder according to the present invention.

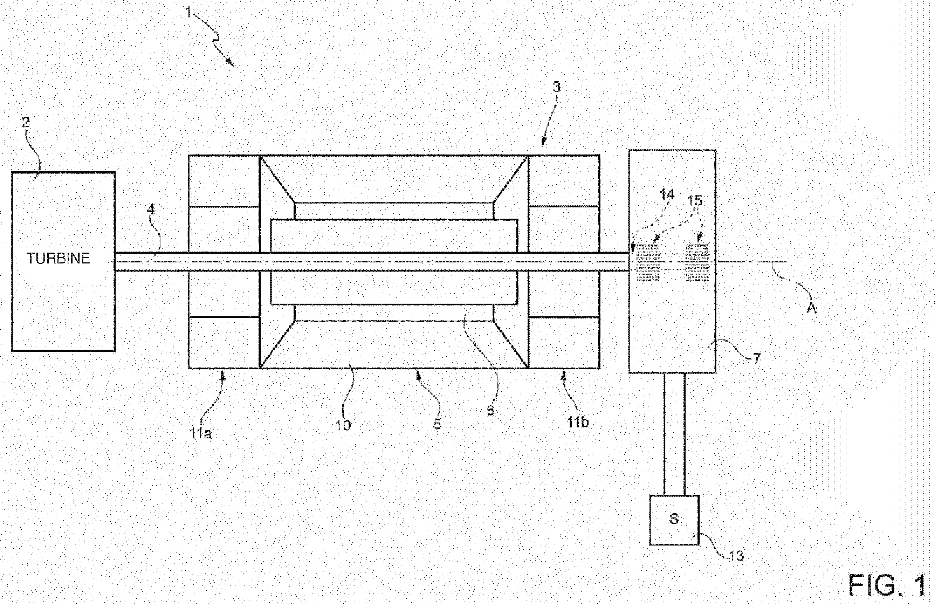

Figure 1 indicates with the reference number 1 a portion of a plant for the production of electrical energy comprising a rotating turbine 2 (schematically shown in Figure 1) and an alternator 3, which is driven by the turbine 2 and is configured to transform the rotary motion imposed by the turbine 2 into electric energy.

The alternator 3 extends along a longitudinal axis A and comprises a shaft 4 connected to the turbine 2, a stator 5, a rotor 6 and a collector assembly 7.

The stator 5 is the fixed armature and comprises a cylindrical core 10, two opposing heads 11a, 11b and a plurality of stator bars (not visible in the accompanying figures). The head 11a is arranged between the core 10 and the turbine 2.

The core 10 is provided with a plurality of axial recesses (not visible in the accompanying figures). Each stator bar extends along a first portion, substantially parallel to the axis A and inside a respective axial recess of the core 10, and along two portions in correspondence with the heads 11a, 11b.

The rotor 6 is housed inside the stator 5 and rotates, driven by the turbine 2. The rotor 6 is configured to generate a rotating magnetic field inducing an electromotive force in the stator 5.

In detail, the rotor 6 comprises a rotor winding provided with a plurality of electromagnets (not visible in the accompanying figures), defined by bars, generally said rotor winding bars.

The electromagnets of the rotor 6 are fed with a supply current through the collector assembly 7, which receives the electrical current from an external source 13 (schematically shown in Figure 1) and transmits it to the electromagnets of the rotor 6. Generally, the external source 13 is defined by an excitation system.

The collector assembly 7 is arranged near the head 11b and extends around an end portion 14 of the shaft 4, which is provided with two collector rings 15.

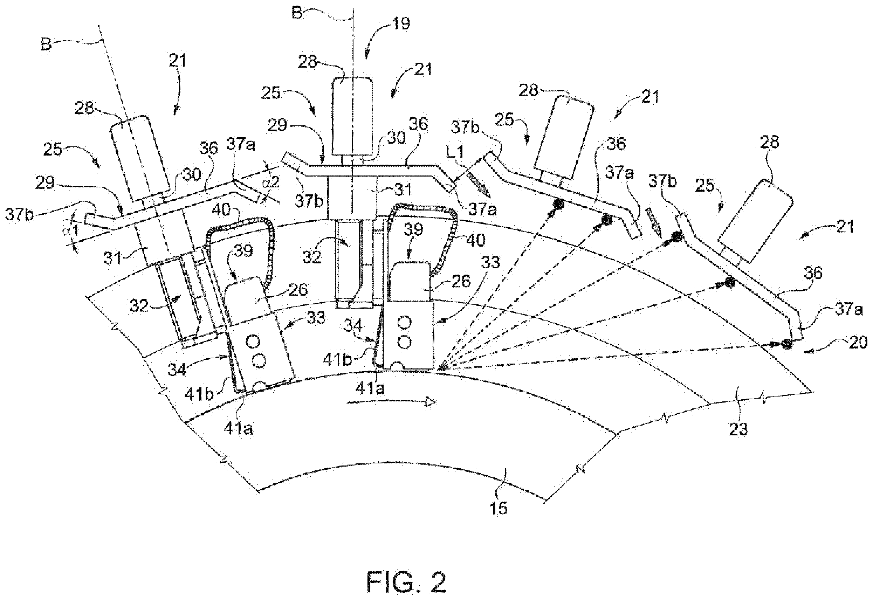

With reference to Figure 2, each collector ring 15 is connected to one or more respective electromagnets by means of a respective connection element 19 comprising a support frame 20 (partially shown in Figure 2) and a plurality of sliding contacts 21 fixed to the support frame 20. Cooling air to cool the sliding contacts 21 is fed to the collector assembly 7.

The support frame 20 is defined by two parallel annular plates 23 (only one of which is shown in figure 2), arranged at a predetermined distance and coupled by means of a plurality of uprights (not visible in the enclosed figures), mutually equidistant and distributed over the entire length of the plates 23.

The thus defined support frame 20 is fixed to a fixed structure of the collector assembly 7 (not shown in the attached figures). In particular, the support frame 20 is fixed so that the sliding contacts 21 are arranged at a determined distance from the respective collector ring 15. Each sliding contact 21 is defined by a brush holder 25 and by one or more brushes 26 coupled to the brush holder 25. The brush holders 25 are coupled, in use, to the support frame 20. In particular, the brush holders 25 are arranged side by side over the entire length of the support frame 20 to define a circular crown of brushes 26, arranged around the respective collector ring 15 and rubbing against the outer surface of the respective collector ring 15.

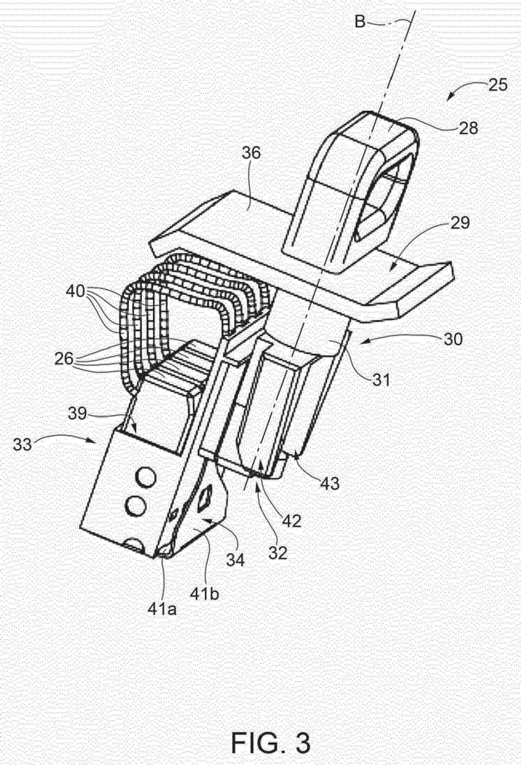

With reference to Figures 2 and 3, each brush holder 25 is provided with a handhold handle 28, a protective element 29, a support pin 30, a spacer 31, a coupling element 32, a support element 33 configured to support at least one brush 26, and a stop element 34.

The handhold handle 28 is made of insulating material and is coupled to a first end of the support pin 30. The handhold handle 28 facilitates the assembly and disassembly of the sliding contacts 21 from the supporting frame 20. This speeds up the ordinary and extraordinary maintenance operations.

The protective element 29 comprises a plate 36, made of insulating material, to substantially separate the friction live area from the electrically isolated area accessible to the operator.

The plate 36 is perforated to allow the passage of the support pin 30 (visible only in Figure 2), which extends along a longitudinal axis B and is coupled, as already mentioned, to the handhold handle 28 and, as shown hereinafter, to the support element 33 and to the coupling element 32.

Preferably, the plate 36 is made of a transparent material to allow the operator an immediate and simple assessment of the state of the brush holder 25 and of the degree of wear of the brushes 26.

In the non-limiting example described and shown here, the plate 36 is substantially flat and comprises two fins 37 arranged along respective opposite edges.

In use, when the brush holders 25 are fixed to the frame 20 and are arranged side by side, each fin 37 of a brush holder 25 is arranged beside a respective fin 37 of the adjacent brush holder 25, as shown in Figure 2.

The fins 37 are inclined with respect to the main extension plane of the plate 36.

In the non-limiting example described and shown here, the fins 37 are inclined to define a first fin 37a protruding toward the friction area and a second fin 37b protruding toward the electrically isolated area.

With reference to Figure 2, the first fin 37a is inclined to define an inclination angle α₁ comprised between 20° and 60°.

In the non-limiting example described and shown here, the inclination angle α₁ is about 30°.

The second fin 37b is inclined to define an inclination angle α₂ comprised between 20° and 60°.

In the non-limiting example described and shown here, the inclination angle α₂ is about 45°.

The inclination angles α₁, α₂ are such to convey the cooling air that circulates inside the collector assembly 7 into the friction area to cool the brushes 26, the support element 33 and any further hot parts, as indicated by the arrows shown in Figure 2.

Moreover, the inclination angles α₁, α₂ are such that, at the same time, they prevent any debris generated by the contact between the brushes 26 and the collector ring 15 from moving from the friction area to the electrically isolated area, as indicated by the dashed lines shown in Figure 2.

A proper cooling and an appropriate protection against the debris are also guaranteed by the fact that the brush holders 25 are mounted side by side on the support frame 20 so that the distance L1 between the fin 37a of a first brush holder 25 and the fin 37b of a second brush holder 25 adjacent to the first brush holder 25 is smaller than a threshold value, preferably equal to 50 mm.

Advantageously, thanks to its special structure, the brush holder 25 according to the present invention can be classified in the degree of protection IP10 according to EN 60529 rules.

The spacer 31 is arranged around the support pin 30 between the plate 36 and the support element 33 and is formed by a bush made of insulating material.

The support element 33 is fixed to the end portion of the support pin 30, is shaped to define a housing seat 39 capable of housing at least one brush 26 and is provided with at least a power supply cable 40 connectable to a respective brush 26 and to the external source 13.

In the non-limiting example described and shown here, the support element 33 is configured to define a housing seat 39 housing four brushes 26 arranged side by side and is provided with four power supply cables 40 connected to the respective brushes 26 and fed by the external source 13 by means of a power supply system not visible in the accompanying figures. The support element 33 is shaped so that the brushes 26 are arranged substantially along directions parallel to the axis B.

The brushes 26 are made of conductive material, capable of transmitting power by friction. In the non-limiting example here described and shown, the brushes 26 are made of graphite.

Preferably, the spacer 31 is sized to define a predetermined distance between the protective element 29 and the upper part of at least one brush 26 housed in the housing seat 29, so that the power supply cables 40 do not meet the protective element 29 or the operator's hand.

In the non-limiting example here described and shown, the predetermined distance between the protective element 29 and the upper part of at least one brush 26 housed in the housing seat 29 is about 80 mm.

With reference to Figure 2 and Figure 3, the brush holder 25 and the support frame 20 are configured and coupled so that the distance D between the brushes 26 of the brush holder 25 and the outer annular surface of the collector ring 15 is smaller than a threshold value, preferably equal to 3 mm.

In the non-limiting example here described and shown, the distance D is about 2 mm.

In particular, the stop element 34 is shaped to selectively lock the brushes 26 in a given position inside the housing seat 39.

In the non-limiting example described and shown here, the stop element 34 is coupled to the handhold handle 28 and can take two operating positions: an active position, wherein the stop element 34 locks the brushes 26 in a given position inside the housing seat 39, thus preventing the friction between the brushes 26 and the collector ring 15, and a rest position, wherein the friction between the brushes 26 and the collector ring 15 is allowed (Figures 2 and 3). The active position is obviously adopted during the replacement of the brushes 26, when friction must be avoided.

The transition from the rest position to the active position is obtained by simply rotating the handhold handle 28 of about 90°.

The stop element 34 is shaped to have quite a low radial size and not to overly influence the definition of the distance D between the brushes 26 of the brush holder 25 and the outer annular surface of the collector ring 15.

In the non-limiting example here described and shown, the stop element 34 is substantially L-shaped and is substantially defined by a support wall 41a and by a fastening wall 41b. The support wall 41a perpendicularly protrudes from the fastening wall 41b. The fastening wall 41b is coupled to the support element 33 and to the handhold handle 28 so that all the brushes 26 housed in the housing seat 39 have the side contacting the collector ring 15 substantially adjacent to the support wall 41a.

In this way, when the handhold handle 28 is rotated, the support wall 41a is pushed toward the brush contact side 26, thus creating a block for the brushes 26 and defining a predetermined distance D between the brushes 26 of the brush holder 25 and the outer annular surface of the collector ring 15.

The stop element 34 is shaped to have quite a small radial size and not to overly influence the definition of the distance D between the brushes 26 of the brush holder 25 and the outer annular surface of the collector ring 15.

In the non-limiting example described and shown here, the thickness of the support wall 41a is about 1 mm.

With reference to Figure 3, the support pin 30 is also coupled to the coupling element 32.

In particular, the coupling element 32 and the support element 33 are arranged on opposite sides of the support pin 30.

In the non-limiting example described and shown here, the coupling element 32 is defined by a body 42 provided with a housing seat 43 to be engaged by a respective fin (not shown in the attached figures) supported by the frame uprights 20.

In use, the brush holder 25 can be simply removed by rotating the handhold handle 28 and by subsequently pulling the handle. The rotation, in fact, actuates the stop element 34 by stopping the friction between the brushes 26 and the collector ring 15 and helps to disengage the fin from the respective housing seat 43. Finally, the pulling action allows the removal of the brush holder from the frame 20.

The insertion of the regenerated brush holder 25 (e.g., a brush holder whose brushes 26 have been replaced) is simply effected by first inserting and then rotating the handhold handle 28.

Thanks to the brush holder 25 according to the present invention, the risks for the operator during the replacement of the brushes 26, while the rotor is in operation, are significantly reduced if compared to those of the prior art solutions.

The shape and the arrangement of the protective element 29, the presence of the spacer 31 and the reduction of the distance between the brushes 26 and the collector ring 15, in fact, reduce the risks for the operator.

Finally, it is clear that the brush holder and the alternator described herein can be modified and varied without departing from the scope of the appended claims.

## Claims

1. Brush holder (25) for a collector assembly (7) of an alternator (1) comprising:
- at least one brush (26);
- at least one support element (33) configured to support at least the brush (26);
- a handhold handle (28) coupled to the support element (33);
- a protective element (29), arranged between the handhold handle (28) and the support element (33);
the brush holder (25) being **characterized in that** the protective element (29) comprises a plate (36) which extends mainly along an extension plane and is provided with two fins (37) arranged along respective opposite edges of the plate (36) and inclined with respect to the extension plane of the plate (36) wherein the fins (37) protrude from opposite sides of the extension plane of the plate (36) to define a first fin (37a) protruding toward a friction area and a second fin (37b) protruding toward an electrically isolated area; wherein a first fin (37a) is inclined with respect to the extension plane of a first angle (α₁), comprised in the interval 20°-60°, and the second fin (37b) is inclined with respect to the extension plane of a second angle (α₂), comprised in the interval 20°-60°.

2. Brush holder according to claim 1, wherein the first angle (α₁) and the second angle (α₂) are equal.

3. Brush holder according to any one of the preceding claims, comprising at least one spacer (31) arranged between the protective element (29) and the support element (33) made of insulating material.

4. Brush holder according to claim 3, comprising a support pin (30), which goes through the protective element (29) and is provided with a first end coupled to the handhold handle (28) and with a second end coupled to the support element (33); the spacer (31) being arranged about the support pin (30) between the protective element (29) and the support element (33) and having an axial length so as to define, in use, a predetermined distance between the protective element (29) and the top of at least one of the brushes (26).

5. Alternator comprising a rotor (6) and a collector assembly (7) provided with at least one collector ring (15) coupled to the rotor (6), with a fixed support frame (20) and with at least one brush holder (25) supported by the support frame (20); the brush holder (25) being of the type claimed in anyone of the preceding claims.

6. Alternator according to claim 5, wherein the collector assembly (7) comprises at least one further brush holder (25) supported by the support frame (20) and provided with a further protective element (29) comprising a further plate (36) extending mainly along a further extension plane and provided with two further fins (37) arranged along respective further opposite edges of the further plate (36) and inclined with respect to the further extension plane of the further plate (36); the distance (L1) between the fins (37) of the brush holder (25) and the further fins (37) of the further brush holder (25) being smaller that a first threshold value, preferably equal to about 50 mm.

7. Alternator according to claim 5 or 6, wherein the brush holder (25) and the support frame (20) are configured and coupled so that the distance (D) between the brush (26) of the brush holder (25) and the collector ring (15) is smaller than a second threshold value, preferably equal to about 3 mm.

## Patentansprüche

1. Bürstenhalter (25) für eine Kollektoranordnung (7) eines Wechselstromgenerators (1), wobei der Bürstenhalter (25) Folgendes umfasst:
- wenigstens eine Bürste (26);
- wenigstens ein Stützelement (33), das konfiguriert ist, die wenigstens eine Bürste (26) zu stützen;
- einen Handgriff (28), der an das Stützelement (33) gekoppelt ist;
- ein Schutzelement (29), das zwischen dem Handgriff (28) und dem Stützelement (33) angeordnet ist;
wobei der Bürstenhalter (25) **dadurch gekennzeichnet ist, dass** das Schutzelement (29) eine Platte (36) umfasst, die sich hauptsächlich entlang einer Erstreckungsebene erstreckt und mit zwei Rippen (37) versehen ist, die entlang entsprechenden gegenüberliegenden Rändern der Platte (36) angeordnet und bezüglich der Erstreckungsebene der Platte (36) geneigt sind, wobei die Rippen (37) von gegenüberliegenden Seiten der Erstreckungsebene der Platte (36) vorstehen, um eine erste Rippe (37a), die zu einem Reibungsbereich vorsteht, und eine zweite Rippe (37b), die zu einem elektrisch isolierten Bereich vorsteht, zu definieren; wobei eine erste Rippe (37a) bezüglich der Erstreckungsebene in einem ersten Winkel (α₁), der im Intervall 20°-60° liegt, geneigt ist und die zweite Rippe (37b) bezüglich der Erstreckungsebene in einem zweiten Winkel (α₂), der im Intervall 20°-60° liegt, geneigt ist.

2. Bürstenhalter nach Anspruch 1, wobei der erste Winkel (α₁) und der zweite Winkel (α₂) gleich sind.

3. Bürstenhalter nach einem der vorhergehenden Ansprüche, der wenigstens einen Abstandshalter (31) umfasst, der zwischen dem Schutzelement (29) und dem Stützelement (33), das aus einem isolierenden Werkstoff hergestellt ist, angeordnet ist.

4. Bürstenhalter nach Anspruch 3, der einen Stützstift (30) umfasst, der durch das Stützelement (29) hindurchgeht und mit einem ersten Ende, das an den Handgriff (28) gekoppelt ist, und mit einem zweiten Ende, das an das Stützelement (33) gekoppelt ist, versehen ist; wobei der Abstandshalter (31) um den Stützstift (30) zwischen dem Schutzelement (29) und dem Stützelement (33) angeordnet ist und eine axiale Länge aufweist, um im Gebrauch einen vorgegebenen Abstand zwischen dem Stützelement (29) und der Oberseite der wenigstens einen der Bürsten (26) zu definieren.

5. Wechselstromgenerator, der einen Rotor (6) und eine Kollektoranordnung (7), die mit wenigstens einem Kollektorring (15), der an den Rotor (6) gekoppelt ist, mit einem festen Stützrahmen (20) und mit wenigstens einem Bürstenhalter (25), der durch den Stützrahmen (20) gestützt ist, versehen ist, umfasst; wobei der Bürstenhalter (25) der Typ nach einem der vorhergehenden Ansprüche ist.

6. Wechselstromgenerator nach Anspruch 5, wobei die Kollektoranordnung (7) wenigstens einen weiteren Bürstenhalter (25) umfasst, der durch den Stützrahmen (20) gestützt ist und mit einem weiteren Schutzelement (29) versehen ist, das eine weitere Platte (36) umfasst, die sich hauptsächlich entlang einer weiteren Erstreckungsebene erstreckt und mit zwei weiteren Rippen (37) versehen ist, die entlang entsprechenden weiteren gegenüberliegenden Rändern der weiteren Platte (36) angeordnet sind und bezüglich der weiteren Erstreckungsebene der weiteren Platte (36) geneigt sind; wobei der Abstand (L1) zwischen den Rippen (37) des Bürstenhalters (25) und den weiteren Rippen (37) des weiteren Bürstenhalters (25) kleiner als ein erster Schwellenwert, vorzugsweise gleich etwa 50 mm ist.

7. Wechselstromgenerator nach Anspruch 5 oder 6, wobei der Bürstenhalter (25) und der Stützrahmen (20) so konfiguriert und gekoppelt sind, dass der Abstand (D) zwischen der Bürste (26) des Bürstenhalters (25) und dem Kollektorring (15) kleiner als ein zweiter Schwellenwert, vorzugsweise gleich etwa 3 mm ist.

## Revendications

1. Porte-balais (25) destiné à un ensemble de collecteur (7) d'un alternateur (1) comprenant :
- au moins un balai (26);
- au moins un élément de support (33) configuré pour supporter au moins le balai (26) ;
- une poignée de prise (28) reliée à l'élément de support (33) ;
- un élément de protection (29), prévu entre la poignée de prise (28) et l'élément de support (33) ;
le porte-balais (25) étant **caractérisé en ce que** l'élément de protection (29) comprend une plaque (36) qui s'étend principalement le long d'un plan d'extension et est munie de deux ailettes (37) prévues le long des bords opposés respectifs de la plaque (36) et inclinées par rapport au plan d'extension de la plaque (36), les ailettes (37) dépassant des bords opposés du plan d'extension de la plaque (36) afin de définir une première ailette (37a) qui dépasse vers une zone de frottement et une seconde ailette (37b) qui dépasse vers une zone électriquement isolée ; une première ailette (37a) étant inclinée par rapport au plan d'extension d'un premier angle (α₁), compris dans l'intervalle de 20 à 60°, et la seconde ailette (37b) étant inclinée par rapport au plan d'extension d'un second angle (α₂), compris dans l'intervalle de 20 à 60°.

2. Porte-balais selon la revendication 1, dans lequel le premier angle (α₁) et le second angle (α₂) sont identiques.

3. Porte-balais selon l'une quelconque des revendications précédentes, comprenant au moins un espaceur (31) prévu entre l'élément de protection (29) et l'élément de support (33), composé d'un matériau isolant.

4. Porte-balais (25) selon la revendication 3, comprenant un axe de support (30), qui passe par l'élément de protection (29) et est muni d'une première extrémité reliée à la poignée de prise (28) et d'une seconde extrémité reliée à l'élément de support (33) ; l'espaceur (31) étant prévu autour de l'axe de support (30) entre l'élément de protection (29) et l'élément de support (33) et ayant une longueur axiale de façon à définir, pendant l'utilisation, une distance prédéterminée entre l'élément de protection (29) et la partie supérieure d'au moins l'un des balais (26).

5. Alternateur comprenant un rotor (6) et un ensemble de collecteur (7) muni d'au moins une bague de collecteur (15) reliée au rotor (6), avec un châssis de support fixe (20) et avec au moins un porte-balais (25) supporté par le châssis de support (20) ; le porte-balais (25) étant du type selon l'une quelconque des revendications précédentes.

6. Alternateur selon la revendication 5, dans lequel l'ensemble de collecteur (7) comprend au moins un autre porte-balais (25) supporté par le châssis de support (20) et muni d'un autre élément de protection (29) comprenant une autre plaque (36) qui s'étend principalement le long d'un autre plan d'extension et munie de deux autres ailettes (37) prévues le long d'autres bords opposés respectifs de l'autre plaque (36) et inclinées par rapport à l'autre plan d'extension de l'autre plaque (36) ; la distance (L1) entre les ailettes (37) du porte-balais (25) et les autres ailettes (37) de l'autre porte-balais (25) étant inférieure à une première valeur de seuil, de préférence égale à environ 50 mm.

7. Alternateur selon la revendication 5 ou 6, dans lequel le porte-balais (25) et le châssis de support (20) sont configurés et reliés de sorte que la distance (D) entre le balai (26) du porte-balais (25) et la bague de collecteur (15) soit inférieure à une seconde valeur de seuil, de préférence égale à environ 3 mm.
